# EUROPEAN PATENT APPLICATION

(11) **EP 4 088 793 A1**
(43) Date of publication of application: **16.11.2022**
(21) Application number: 20912153.2
(22) Date of filing: 02.02.2020
(51) Int. Cl.: A63F 13/00, G07C 15/00, A63F 3/08

(54) **E-TICKET AND E-COUPON, GAME SYSTEM AND GAME METHOD BASED ON AN E-TICKET AND AN E-COUPON**

(30) Priority: 12.01.2020 EA 202000008
(71) Applicant: Silaev, Alexander Ivanovich, 6300 Zug (CH); Silaeva, Ekaterina Alexandrovna, Moscow, 121170 (RU); Silaev, Nikolay Alexandrovich, Moscow, 119334 (RU)
(72) Inventor: Silaev, Alexander Ivanovich, 6300 Zug (CH); Silaeva, Ekaterina Alexandrovna, Moscow, 121170 (RU); Silaev, Nikolay Alexandrovich, Moscow, 119334 (RU)
(74) Representative: Rutz & Partner
(86) International application number: PCT/EA2020/000001
(87) International publication number: WO 2021/139865

(57) **Abstract**

The claimed group of inventions relates to the entertainment industry, and more particularly to systems and methods for playing games based on searching for winning indexes in a game ticket with a specified prize. The present problem of providing and checking the correctness of a game process in a communication network for a remote user is solved in a game system and game method based on an electronic ticket and an electronic coupon (e-ticket and e-coupon). An e-ticket is displayed before the start of a game on the screen of a terminal or on a paper medium and contains a plurality of game indexes, an open code containing encrypted information about a combination of winning indexes which are stored on a game server, and information about prizes for a successful search. The user identifies the game indexes in the e-ticket and sends said indexes from the terminal to the game server. The game server compares the game indexes and the winning indexes, determines the result of the game, i.e. prize or no prize, and sends to the terminal an e-coupon for display or printing, which contains the game indexes and the winning indexes, the result of the game and an encryption key. The e-coupon allows the user to obtain their prize and/or to check on a public resource that the result of encrypting the combination of winning indexes using the aforesaid key matches the open code, and that any alteration of the key and/or the combination of winning indexes corrupts the open code.

## Description

### FIELD OF THE INVENTION

The present group of inventions relates to the entertainment industry namely to means, methods and systems that provide games in communication networks for remote users involving electronic tickets with electronic coupons.

### BACKGROUND OF THE INVENTION

There is a known *Allegry* lottery ticket with designation of the game prize and a printed protection of the game field that contains the winning information. The prize can be won by unerringly disclosing the winning information on the game field immediately after purchasing the ticket (US Patent US 5562284, A 63 F 3/06, 08.10.1996). The disadvantage of the known lottery ticket is the vulnerability from a covert violation of the protection of the game field and extraction of the winning information at different stages of ticket distribution.

Over the past years, various options have been proposed and implemented to improve the printed protection of winning information in tickets with designated prizes.

There is also a known lottery ticket with a designated prize and printed protection of a set of cells, some of which contain winning symbols and the rest do not contain such symbols; to win a prize, it is required to remove protection only from cells containing the winning symbols (Russian Patent RU 2160622 C1, A 63 F3 / 06, B 42 D 15/00, 20.12.2000). The printed protection of this ticket is enhanced with the use of holograms, the violation of the integrity of which on individual cells allows one to visually see traces of breaking the protection.

In a known lottery ticket game called *The Fair Game,* further strengthening of the printed protection of the game field with winning symbols is achieved by applying several layers of paints with different physical and chemical properties (Russian Patent RU 2224569, A 63 F3 / 06, 27.02.2004). To receive the prize, a game participant must hand over the winning ticket for examination to representatives of the game organizer, whose objectivity the participant may doubt, as violations of the protection of the game field outside the cells with winning symbols serve as the basis for the cancellation of the prize. At the same time, the game organizers bear significant expenses to cover the costs of lottery ticket development and production with multilayer protection against counterfeiting and possible incorrect actions of the game participants, as well as the costs of logistics and examination of tickets presented for the issuance of prizes, and the costs of resolving disputes with game participants in case of their incorrect actions with lottery tickets and / or damage to lottery tickets during transportation to the place of examination or in the process of examination.

There is also a game system with the functionality of the mentioned game method, in which the game organizer declares the category of products used in the game, each having a set of symbols made with the possibility of uniquely identifying the given product and dividing the set of symbols into three groups of symbols. The game participant having one of the above products, after entering the game, transmits to the game organizer from the terminal via a communication channel a message containing information about the symbols of the first group. The game organizer, upon request of the game participant, transmits a message containing information about the set of game symbols via a communication channel to the terminal setting the value of the win. The game participant determines his/her value of the win by comparing the set of game symbols with the set of symbols of the second group, and to confirm the winning of the prize, the game participant sends messages from the terminal to the game organizer via a communication channel containing information about the symbols of the first, second and third groups. The above game method is implemented in a device that includes an input-output processor adapted to connect to terminals via communication channels. The input-output processor is connected to an identification unit, a payment unit, a generator of game symbols, a registration unit, as well as a verification unit interconnected with the input-output processor, a gaming account access unit and a reference unit, a certification centre interconnected with a verification unit, and a memory unit interconnected with an identification unit, a payment unit, a registration unit, a verification unit, a gaming account access unit and a reference unit (Russian Patent RU2250124, A 63 F3 / 06, 20.04.2005). The advantages of this system include the possibility of conducting a probabilistic "fair" game in a computer network for remote users of network terminals while reducing the cost of organizing and conducting it in comparison with the use of the Fair Game lottery tickets. At the same time, most of the known declared categories of products with sets of symbols applied to them, e.g., product packaging and transport passes, allow the possibility of products substitution and manipulation with the sets of symbols of the second and / or third group by unscrupulous participants of the game, including exchange of game combinations through social networks, which leads to violation of the 'fair play' principle.

The closest prototype of the claimed inventions is an interactive game system and method, in which a game participant, using a computer application of the terminal, sets a game combination of symbols and an encryption key, encrypts the game combination into an open code using the terminal encryption unit and an encryption key, and transmits the open code over a communication network to the game server.

In response, the participant receives on the terminal a winning combination of symbols and compares symbols of the game combination and the winning combination according to the winning determination criterion. If detecting a win, the participant sends, from the terminal to the game server via a communication network, a game combination of symbols and an encryption key, with the use of which the game server encrypts the game combination in the server encryption unit, compares the encryption result with the open code and, if they are identical, compares the game and the winning combinations according to the win determination criterion and, if a win is found, confirms the win to the game participant (Eurasian application EA 201700055, A 63 F 13 / 00, 07.02.2017).

The prototype technologically excludes the possibility of manipulating the game and winning information by unscrupulous game participants and / or game organizers. At the same time, the inclusion of a game participant in the process of creating an encryption key on the terminal makes the prototype not enough clear to attract unexperienced Internet users and participants of traditional games and lotteries to the game.

### SUMMARY OF THE INVENTION

The objective of the claimed invention is to create an electronic ticket (hereinafter referred to as an e-ticket), an electronic coupon (hereinafter referred to as an e-coupon), a game system and a game method in a communication network to search for a winning combination of elements in a given game set with a designated prize, which exclude the costs of ticket production, distribution and validation that are typical for well-known ticket games with designated prizes in their printed version, and technologically exclude the possibility of manipulating game information by both game organizer and participants. The technical result set by the given objective is the fairness and unambiguity of evaluating the game result by its organizer and participants, while reducing the cost of conducting games with designated prizes and increasing their popularity among players of traditional games and lotteries with printed tickets.

The above noted technical result is achieved with the use of an e-ticket and an e-coupon of a game implemented in a communication network, which e-ticket and e-coupon are displayed on the terminal, respectively, before the start and after the end of the game,
the e-ticket contains the following e-ticket information
   - a game set of indices,
   - a list of prizes,
   - a game deadline,
   - a game identifier,
   - an open code with encrypted information about a winning combination of indices,
   - a link to a game address that address includes the game identifier, the open code, and a game server network address of the game for searching the winning combination of indices, which winning combination of indices is stored in a database of the game server along with the game identifier, the open code, and an encryption key,
the e-coupon contains
   - the e-ticket information,
   - a game combination of indices,
   - a game completion time,
   - a game result relating to winning a prize or not winning a prize,
   - the encryption key,
   - the winning combination of indices,
   - a link to a control address that address includes an address of a code validator, the encryption key, the winning combination of indices, and the open code.

The technical result is also achieved by using a modification of the claimed e-ticket and e-coupon, in which the e-ticket and e-coupon contain a QR code of the open code.

The technical result is also achieved by using a modification of the claimed e-ticket and e-coupon, wherein the e-ticket is printed on paper, the e-coupon is printed on paper or displayed on the terminal screen, the links to the game address and to the control address are presented by a QR code of the game address and a QR code of the control address.

The technical result is also achieved by using a modification of the claimed e-ticket and e-coupon, wherein the game set of indices is presented both in the e-ticket and in the e-coupon as a table with indexed cells, the e-coupon indicates not won prizes and won prizes in case of a win, the table of the e-coupon indicates cells with the game combination of indices, and cells with the winning combination of indices.

The technical result is also achieved by using a type of the claimed modification of the e-ticket and e-coupon, wherein:
- in the table of the e-ticket, each line or group of lines contains a prize for the error-free search for cells with the winning combination of indices in this line or group of lines and in the previous lines in a row, starting from the first line,
- in the table of the e-coupon, each line or group of lines contains won or not won prizes.

The technical result is achieved in a game method applied in a communication network, comprising the steps of:
- specifying a game set of indices and options for composing a winning combination of indices and a game combination of indices,
- setting means of payments and game costs, prizes, and a prize-winning criterion based on a comparison of the game combination of indices and the winning combination of indices,
- informing users about game rules, means of payment, game costs and prizes,

**upon request for e-ticket from a terminal,**
   - carrying out the game cost payment process,
   - calculating a game deadline, generating a game identifier, an encryption key, and a winning combination of indices,
   - creating a secret code that contains the encryption key and the winning combination of indices,
   - encrypting the secret code into an open code,
   - creating a link to a game address that address contains a game server address in the communication network, the game identifier, and the open code,
   - forming an e-ticket record in the database and storing in the e-ticket record the game set of indices, the game deadline, the game identifier, the open code, and the game address,
   - creating a link to a control address that address contains an address of a code validator, the secret code as a first parameter and the open code as a second parameter of the control address,
   - forming an e-coupon record in the database and storing in the e-coupon record the above information from the e-ticket record, the secret code, and the control address,
   - transmitting the e-ticket record over the communication network to the terminal,
**in the terminal,**
   - displaying the e-ticket record as an e-ticket, or,
   - converting the link to the game address into a QR code of the game address and displaying the e-ticket on screen with the QR code of the game address or printing the e-ticket with the QR code of the game address on paper,
   - the user marking indices of the game combination in the game set of indices of the e-ticket, establishing a communication session between the terminal and the game server in the communication network at the game address, and transmitting information about the game combination of indices,
**in the communication session with the terminal,**
   - finding the e-coupon record in the database according to the game address,
   - checking the game deadline,
   - receiving information about the game combination of indices,
   - comparing the game combination of indices and the winning combination of indices according to the prize-winning criterion,
   - determining the game result relating to winning or not winning a prize,
   - storing the game result, the game combination of indices and the winning combination of indices in the e-coupon record, and
   - transmitting the e-coupon record over the communication network to the terminal,
**in the terminal,**
   - converting the links to the game address and the control address into a QR code of the game address and a QR code of the control address and
   - displaying the e-coupon record with the QR code of the game address and the QR code of the control address on screen or printing the e-coupon record with the QR code of the game address and the QR code of the control address on paper,

**Initiated by the user,**
- establishing a communication session between the terminal and the game server at the game address, and requesting a prize,
- establishing a connection between the terminal via a communication channel with the code validator at the control address,

**upon receipt of the request for a prize in the communication session with the terminal,**
   - retrieving the e-coupon record in the database by the game identifier and the open code from the game address,
   - reading the game result from the e-coupon record,
   - if the game result is positive and a prize has not been issued, issuing the prize and saving prize issue information in the e-coupon record,
**upon receipt of the first and the second parameters of the control address via the communication channel of the terminal at the code validator,**
   - encrypting the first parameter of the control address,
   - comparing the result of the encryption with the second parameter of the control address,
   - transmitting the result of the encryption and the result of the comparison via the communication channel to the terminal,
**the user at the terminal,**
   - observing the results of encryption and comparison,
   - entering to the terminal and transmitting to the code validator modified values of the control address parameters,
   - receiving and observing the results of their encryption and comparison on the terminal.

The technical result is also achieved in a modification of the claimed game method, characterized in converting the open code into an open code QR code and displaying the open code QR code in the e-ticket and e-coupon, converting the result of encryption of the secret code received from the code validator into a QR code, comparing this QR code with the open code QR code and displaying the comparison result on the terminal.

The technical result is also achieved in a modification of the claimed game method, wherein
- upon completion of the game cost payment process, forming, saving, transmitting to the terminal, and displaying on the terminal the game activation address comprised of the game server address in the communication network and the game activation code,
- generating the e-ticket and e-coupon data and records after the establishment of a communication session by the terminal at the game activation address.

The technical result is also achieved in a modification of the claimed game method, in which:
- having received a product purchase receipt, the user transmitting from the terminal a set of values of the parameters displayed in the receipt via the communication network to the game server,
- in a communication session with the product seller's server, requesting a confirmation of the receipt with the accepted set of parameter values, and registering the confirmation as a successful completion of the game cost payment process.

The technical result is also achieved in a modification of the claimed game method, characterized in converting the open code into an open code QR code and displaying the open code QR code in the e-ticket and e-coupon, converting the result of encryption of the secret code received from the code validator into a QR code, comparing this QR code with the open code QR code and displaying the comparison result on the terminal.

The technical result is also achieved in a modification of the claimed game method, characterized in
- upon completion of the game cost payment process, forming, saving, transmitting to the terminal, and displaying on the terminal the game activation address comprised of the game server address in the communication network and the game activation code,
- generating the e-ticket and e-coupon data and records after the establishment of a communication session by the terminal at the game activation address.

The technical result is also achieved in a modification of the claimed game method, in which
- having received a product purchase receipt, the user transmitting from the terminal a set of values of the parameters displayed in the receipt via the communication network to the game server,
- in a communication session with the product seller's server, requesting a confirmation of the receipt with the accepted set of parameter values, and registering the confirmation as a successful completion of the game cost payment process.

The technical result is also achieved in a modification of the claimed game method, in which
- the user marking game combination indices in the game set of a printed e-ticket and scanning the e-ticket by the terminal,
- on the terminal, detecting and identifying the marks of the game combination indices in the e-ticket, transmitting the identified indices to the game address as information about the game combination, printing the e-coupon,
- having received the e-coupon, the user by means of the terminal or a mobile device
   --- scanning and decoding the QR code of the game address, establishing a communication session in the communication network with the game server at the game address, and transmitting a prize request,
   --- scanning and decoding the QR code of the control address and establishing a connection via the communication channel with the code validator at the control address.

The technical result is also achieved in a modification of the claimed game method, in which
- the user marking game combination indices in the game set of a printed e-ticket, scanning or photographing the e-ticket and transmitting to the game server address the image of the e-ticket as the information about the game combination,
- upon receipt of the image of the e-ticket, decoding the game address from the QR-code of the game address, identifying the indices of the marked game combination indices, applying the identified indices as the game combination information in the game with the decoded game address.

The technical result is also achieved in a modification of the claimed game method, in which
- the user transmitting information about the game combination of indices from the terminal to the game address in iteration process, sending at each iteration one or several indices of the game combination of indices,
- comparing the received indices with the winning combination of indices based on the prize-winning criterion and transmitting the current result of the game to the terminal,
- in case of a positive current result of the game, offering to go to the next iteration or to complete the game with the prize won,
- in case of a negative current result of the game, either cancelling the current prize won and closing the game, or cancelling the current prize won and reducing not-won prizes.

The technical result is also achieved in a modification of the claimed game method, characterized in
- specifying the game set of indices as a table with indexed cells,
- the user marking the game combination cells in the e-ticket table,
- indicating the game and winning combination cells in the e-coupon table.

The technical result is also achieved in a modification of the claimed game method, characterized in encrypting the secret code and the first parameter of the control address by means of a one-way hash function.

The technical result is achieved in a game system which game system includes:
- at least one terminal containing means of receiving and transmitting information, a QR code generator, a QR code decoder, a game combination detector, a scanner, a printer,
- a communication network, which provides information transfer with the definition of the network addresses of the transmitter and receiver,
- a game server configured to connect to the terminal via the communication network through an input-output processor and containing a query processor and a memory unit connected in series to the input-output processor, a payment unit, a combination generator, an encryption unit, a winning logic unit connected in parallel to the query processor and the memory unit, an image extractor connected to the input-output processor and the query processor, a QR code decoder and a combination detector interconnected with the image extractor,
- a code validator, configured to be connected to terminals via communication channels, containing an encryption unit and a comparison unit.

The technical result is also achieved in a modification of the claimed game system, wherein the Internet is used as a communication network and communication channels, and the code validator is configured by means of a website with publicly available software source code.

The technical result is also achieved in a modification of the claimed game system, in which half-duplex communication channels of messengers are used as the communication network and / or communication channels.

### BRIEF DESCRIPTION OF THE DRAWINGS

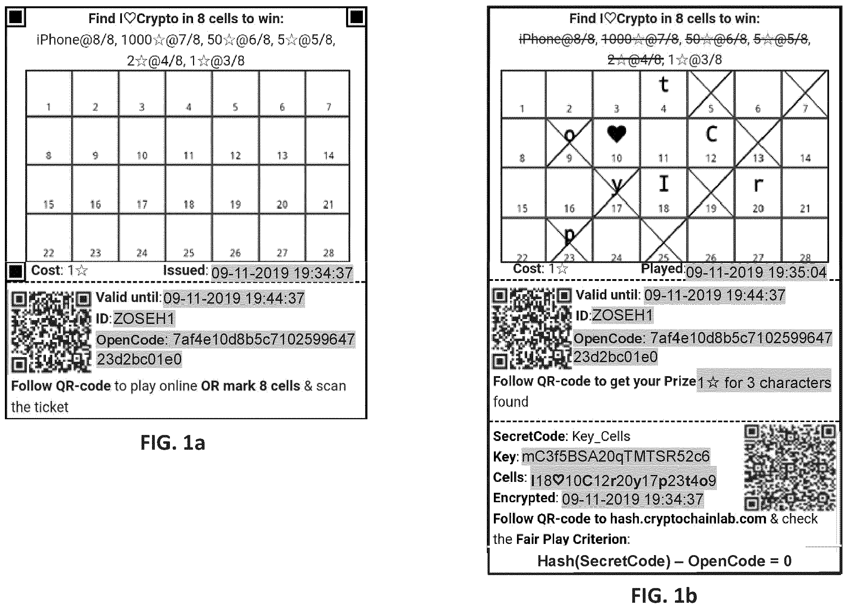

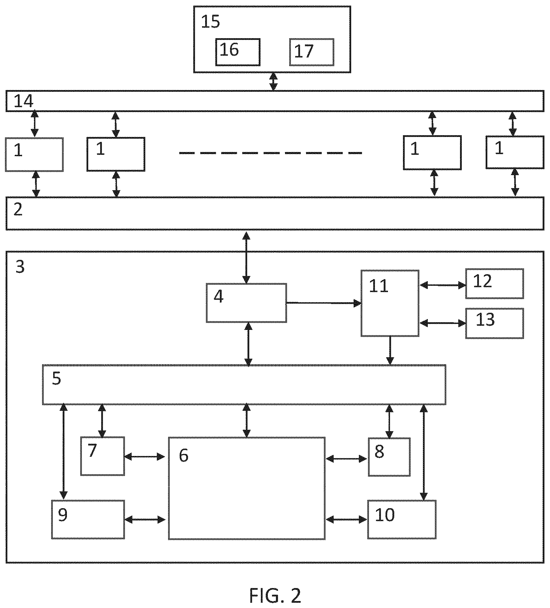

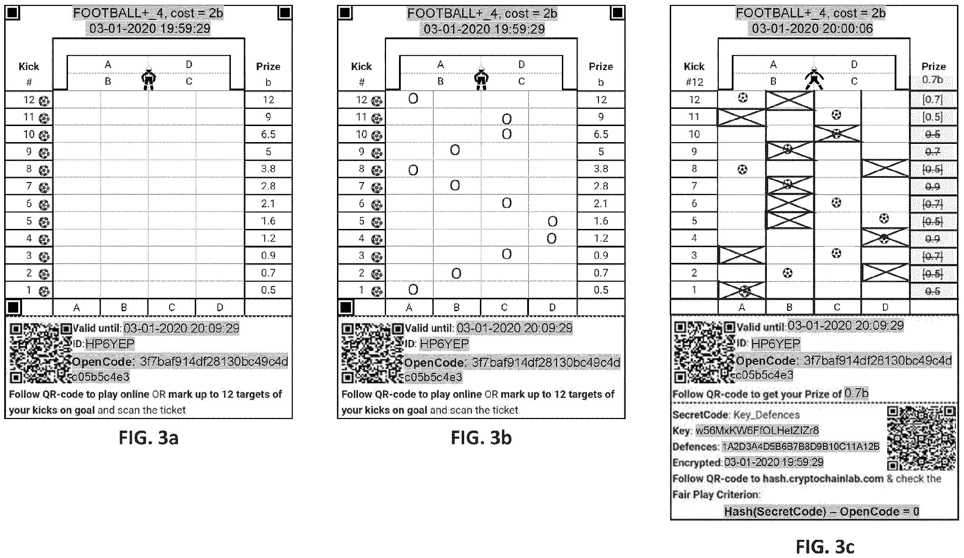

FIG. 1 shows the claimed e-ticket (fig. 1a) and e-coupon (fig. 1b) for the **"Find This"** game. Fig. 2 is a functional unit diagram of the claimed game system. FIG. 3 shows the claimed e-ticket (Fig. 3a, 3b) and e-coupon (Fig. 3c) for the **"Football+_4x12"** game.

### PREFERRED EMBODIMENTS OF THE INVENTION

In the following description of the e-ticket, e-coupon, game system and method, when characterizing functional units, elements and devices, and describing their operation, specific narrow terms are used, due to the applied tasks solved by these units, elements and devices, while their auxiliary, system-wide and service processes (conversion of data and command formats, exchange protocols, memory addressing, generation of system messages, execution of commands, etc.) are mentioned only when necessary to clarify the functionality of the applied problems being solved. However, the invention is not limited by the scope of the accepted terminology, so that each term used covers all equivalent elements, functional units and devices operating in a similar way and used to perform the same functions.

The first preferred embodiment of the invention is mainly intended for gamification of promotions and loyalty programs, where users receive bonuses and view ads, and is designed for playing over a communication network from a terminal against a server with the use of an e-ticket printed on paper and / or displayed on the terminal display before the start of the game and an e-coupon displayed on the terminal display at the end of the game. Below, for brevity, this option is referred to as the first option.

The second preferred embodiment of the invention is mainly intended for organizing games among lottery fans involving paper tickets and is made for playing over a communication network from a terminal against a server using an e-ticket and an e-coupon printed on paper before the start and at the end of the game accordingly. Below, for brevity, this option is referred to as the second option.

The first embodiment of the invention is basic for the second embodiment, so the first embodiment of the invention is described in detail below, with additions for the second embodiment as necessary.

The e-ticket is intended for the user to compose a game combination of indices and to enter the game combination indices into the game as well as to display a game cost, deadline, possible prizes, the game set of indices, and unique game parameters - a game identifier and an open code.

The terminal prints the e-ticket on paper and / or displays it on the display after a successful completion of the game cost payment process. The e-ticket contains: the game name, cost and deadline, information about the prizes, the game set of indices, the unique game parameters, a link to the game address or a QR code of the game address.

In the second embodiment of the invention, the terminal prints the e-ticket with the QR code of the game address on paper.

The user can choose the name and cost of the game on the terminal from a given list of games and their costs, based on the proposed prizes offered to be won. One game is usually held for one promo activity, and usually there is no cost for playing the game, or it can be calculated in seconds of ads to be viewed before or during the game. In frames of a loyalty program, a game cost can be nominated in bonus points or in seconds of viewing ads. In a lottery game, a game cost is expressed in monetary terms. The game name and cost are stored in the game server database.

A game deadline is indicated in the e-ticket as a date-time value or as a time interval until or before the expiration of which the e-ticket is valid, which means one can play using this e-ticket, and after this period the e-ticket becomes invalid. The game deadline is calculated by the game server after a successful completion of the game cost payment process and is stored in the game server database.

Prize information includes an indication of the prize for a total win in the game and may include designations of prizes for incomplete winnings. For a given game name and cost, the information about the prizes is stored in the database of the game server.

The game set of indices displayed in the e-ticket is intended to provide the user with the opportunity to select and mark as a game combination of indices any of the indexes of the game set allowed by the rules. The game set of indices for the selected game is specified by the game rules, is stored in the game server database, and is displayed in the e-ticket by a set of indices or a table with indexed cells.

In the game referred to as **"Find a winning number in the set of all N-bit numbers",** the game set is displayed in N lines, each line contains 10 digits from 0 to 9 without repetitions, the winning combination is one number from the interval [00 ... 0, 10^{N}-1], the user marks in each line one digit of his/her game number, the coincidence of the game and winning numbers wins the maximum prize, the modulus of the difference between the game number and the winning number within the specified limits wins a smaller prize, the coincidence of the numbers in their some corresponding digits wins a smaller prize.

In the game referred to as **"Find M winning cells in a table of N cells",** the game set is displayed as a table of N indexed cells, a winning combination contains M cells, the user marks the cells of his/her game combination in the table, full coincidence of the cell indices of the game and winning combinations wins the maximum prize, a partial match wins a smaller prize or results in a loss. A particular modification of this game is the **"Find This"** game, where "This" is a given or an unknown text of M symbols, the game set is represented by a table of N numbered cells (N>M), the winning combination contains M cells, each of which contains a symbol from the text "This". The user should mark any M cells in the table as his/her game combination, the presence of all symbols that make up the text "This" in the cells of the game combination wins the maximum prize, the presence of empty cells in the game combination reduces the prize or leads to a loss. This game is discussed below on the example of the game **Find I** 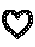 **Crypto.**

In the game referred to as **"Row-by-row search for winning cells in** a **table of N rows",** the game set is represented by a table with indexed cells, a winning combination contains M table cells, with M≥N, rows can contain different number of cells, each row contains at least two cells and at least one non-winning cell. The user should mark in the table his/her game combination of L cells by row-by-row selection of one cell at a time, starting from the first line to the line with the number L, where L≤N. The game combination of N cells of the winning combination wins the maximum prize. In this game, each row or group of rows in the table is supplemented with a designation of a prize for a successful sequential search, including a search in the given row or group of rows; unsuccessful search in any line cancels the accumulated prize. This game is discussed below using the example of a **Football** game with paper e-ticket.

The game identifier is intended for game users and administrator to search for the game in the server database to get information about the game result and about the
issue / non-issue of the prize won. The game identifier is generated by the game server upon completion of the game cost payment process and is stored in the game server database.

The open code is intended for secure access to the game of the e-ticket holder, issuing a prize and checking the correctness of the game (paired with a secret code - see below). The open code contains encrypted information about the winning combination, is generated by the game server by encrypting a secret code composed of the winning combination and an encryption key and is stored in the database of the game server.

The link to the game address and the QR code of the game address are intended for accessing the game at the game address in the communication network and for prize claiming. In the display of the e-ticket on the terminal display, the QR code of the game address can serve as a direct link to the game address. The game address is compiled by the game server and includes: the game server address in the communication network, the game identifier, and the open code as parameters of the game address. The link to the game address is stored in the game server database. The QR code of the game address is generated by the terminal from a link to the game address.

The e-coupon is intended to display the completed game and its result to the user, to request the prize won and to check the correctness of the game. The terminal displays the e-coupon upon completion of the game. In the second embodiment of the invention, the terminal prints out the e-coupon on paper.

The e-coupon contains the same information as the e-ticket, and, in addition, contains the date-time of the game completion, information about the prize won or about no winning, the game set of indices with marks of the game and winning combinations, the address of the code validator, the secret code, the link to the verification address, it may contain the QR code of the verification address as well.

The link to the game address and the QR code of the game address in the e-coupon are designed for getting access to the completed game and performing the process of issuing the won prize.

The date-time of the game completion and the information about the prize won or about no winning are intended for presenting the game result to the user. The date-time of the completion of the game and information about the prize won or about no winning are recorded by the game server upon completion of the game and stored in the game server database.

The game set with marks of indices of the game and winning combinations is intended to present the completed game to the user. The game set with marks of indices of the game and winning combinations is formed by the game server upon completion of the game in a text, table or other format and is stored in the database of the game server.

The code validator address, secret code, link to the control address and the QR code of the control address are designed to check the correctness of the game by means of the code validator. The link to the control address contains the address of the code validator, the secret code and the open code as the first and second parameters of the code validator address and is intended to transfer the secret and open codes to the code validator. The address of the code validator is specified in the rules, the secret code is generated by the game server and stored in its database, the QR code of the control address is generated by the terminal from a link to the control address.

To make the process of checking the game correctness more clear, the e-ticket and e-coupon may contain the open code dublicated by its QR code generated by the terminal.

FIG. 1a shows an e-ticket for **"Find I** 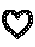 **Crypto"** game. The upper part of the e-ticket includes the name of the game, **Find I** 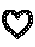 **Crypto,** and a list of prizes - an iPhone for the error-free search for 8 characters of the text **I** 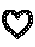 **Crypto,** 1000 points (*noted as ☆*) for 7 found characters from 8 searched characters, 50 points for 6 found characters from 8 searched characters , 5 points for 5 characters found out of 8 searched characters, 2 points for 4 characters found out of 8 searched characters, 1 point for 3 characters found out of 8 searched characters. The following part contains a table of 28 numbered cells. Below the table there are date and time of the game creation for the given e-ticket and its cost, which is 1 point. There are positioning marks in three corners of the upper part of the e-ticket, for detecting the game combination. The lower part of the e-ticket includes the QR code of the game address, the game deadline, the game identifier, the open code, and an instruction to follow the QR code to the interactive game or mark 8 cells in the table and scan the e-ticket in the terminal.

FIG. 1b shows an e-coupon for the **"Find I** 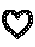 **Crypto"** game. The upper part of the e-coupon includes the name of the game and a list of 6 prizes, in which the first 5 prizes are crossed out, the last prize is not crossed out - this is the win in this game for 3 found characters of 8 characters. The following part contains a table of 28 numbered cells, 8 cells display the sought characters of the text **I** 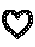 **Crypto,** the numbers of these 8 cells make up a winning combination {4, 9, 10, 12, 17, 18, 20, 23}. The crosshairs in the table indicate the cells marked by the user in the e-ticket, so that in this game the game combination is this set of numbers of the cells marked by the user: {5, 7, 9, 13, 17, 19, 23, 25}. Thus, the user has marked 3 cells with numbers 9, 17, 23 in the received e-ticket, in which the letters o, y, p had been "hidden", and has also marked 5 empty cells with numbers 5, 7, 13, 19, 25. According to the list of prizes, the winning for 3 letters found equals 1 point. The date-time of the completion of the game and its cost, 1 point, are indicated under the table.

The middle part of the e-coupon includes the e-ticket information (QR code of the game address, game time, game identifier, open code) and an instruction to the user to follow the QR-code of the game address and receive a prize of 1 point.

The lower part of the e-coupon includes the secret code comprised of the key and a set of characters with a winning combination - the numbers of the cells in which these characters had been "hidden" before the game, the QR code of the control address comprised of the code validator address, secret code and open code as the first and second parameters of the code validator address, a proposal to check the fair play criterion on the website with the specified code validator web address.

The e-ticket and e-coupon claimed in the present invention are used by the user in the game system, the unit diagram of which is shown in FIG. 2.

The system includes at least one terminal (1) interconnected via a communication network (2) with the game server (3). The game server is connected to the communication network through an input-output processor (4) and contains:
- connected in series with the input-output processor a query processor (5) and a memory unit (6),
- interconnected with the query processor and the memory unit, a payment unit (7), a combination generator (8), a winning logic unit (9), an encryption unit (10),
- connected to the input-output processor and to the query processor an image extractor (11) with a QR code decoder (12) and a combination detector (13).

The terminal has a display, a QR code generator, a QR code decoder and a combination detector (not shown in FIG. 2). The terminal is also connected via a communication channel (14) to a code validator (15), which includes an encryption unit (16) and a comparison unit (17). In the second embodiment, the terminal includes a printer.

The game system is designed in frames of a *client-server* architecture, where 'clients' are the terminals, and 'servers' are the game server (below referred to as the server) and the code validator. The system operates by exchanging messages over the communication network between terminals and the server and by exchanging messages over communication channels between terminals and the code validator.

The terminal is intended for data input-output, generation, processing, storage and transmission of requests via the communication network to the server and via communication channels to the code validator, as well as for receiving, processing, storing and outputting messages, in particular, for paying the game cost, receiving and displaying the e-ticket and e-coupon with generation of QR codes and printing option, entering the game combination indices according to the user's marks on the image of the game set in the e-ticket, decoding the game address from the game address QR code in the e-ticket or e-coupon and transmitting game requests and/or prize requests via the communication network to the server at this address, decoding the control address from the control address QR code in the e-coupon and transmitting the game verification request via communication channels to the code validator at this address, receiving responses to requests.

Personal computers, modern cash registers, mobile devices are used as terminals; they perform the standard functions of receiving and transmitting messages over the Internet and half-duplex communication channels, input-output of information through the display and keyboard, converting a text line into a QR code, scanning a QR code with a camera or a scanner and decoding the QR code into a text string by means of the QR code generator and QR code decoder application programs in the computer memory of the terminal. The terminal's network functions are performed by management means of dynamic web pages of standard web browsers. Functions of messaging over communication channels are performed by known hardware and software, including the Internet, Internet messengers, SMS messengers and USSD messengers of cellular communications.

In the second embodiment of the invention, the terminal is also intended for accepting payments, printing the e-ticket and e-coupon on paper, entering the e-ticket image with user's marks of his/her game combination from a paper e-ticket, detecting the game combination following the marks on the paper e-ticket, decoding the game QR code address. The terminal performs these functions by means of a payment receiver, a printer, a scanner, an image extractor, a combination detector, and a QR code detector. The payment receiver is designed to pay the cost of the game and is implemented by a payment device. The printer is designed for printing the e-ticket and the e-coupon and is implemented by a built-in or connected printing device.

The scanner is designed to scan the e-ticket and enter its image into the terminal and is implemented by a scanning device. The image extractor is designed to extract the image of the game set and the image of the QR code from the e-ticket image and is implemented by an application program. The combination detector is designed to detect the user's marks on the image of the game set, fix the locations of the marks in the game set, correlate the locations of the marks with the indices of the game set, and compose a game combination from these indices. The combination detector is implemented by an application program in the computer memory of the terminal. A QR code decoder is designed to decode QR code images and is implemented by an application program.

The specified functions of the terminal in the second embodiment of the invention are performed by a modern bank self-service terminal or a lottery terminal, similar to *Game Touch* terminals by *International Game Technology PLC* (see the Internet resource: www.igt.com/products-and-services/lottery/touchpoints/ self-service).

The communication network (2) is intended for the exchange of data and messages between the terminals and the server with the determination of network addresses of the transmitter and the receiver. Communication channels are intended for the exchange of messages between the terminal and the code validator. The Internet, half-duplex messaging channels in messengers, including SMS / MMS / USSD messaging channels in cellular networks are used as communication channels.

In the preferred embodiments of the invention, the Internet is used as the communication network and communication channels.

The server (3) is designed to perform gameplay, create, update, store and process game registries and their parameters, and to perform known functions of the prototype system server, such as:
- providing information on the game rules, costs and prizes,
- payment for participation in the game
- issuance of prizes won
- reception, identification, and registration of messages with the detection of a game request with information about a game combination, requests for prizes,
- generating and sending messages in response to requests
- generation of winning combinations, encryption keys and secret codes
- conversion of the secret code into the open code by means of encryption
- determining the result of the game - winning a prize or losing.

In addition, in the second embodiment of the invention, the server performs the functions of generating e-ticket and e-coupon records, extracting the QR code image and the game set image from the e-ticket image, decoding the QR code, forming the game combination based on the game set image with marks of the game combination entered in the e-ticket by the user.

The server is implemented on the basis of a computer server with an I/O processor (4), a central processor, memory, a timer, a database management system, which, in interaction with the operating system, perform at the level of application programs the functions of a query processor (5), a memory unit (6), a payment unit (7), a combination generator (8), a winning logic unit (9), an encryption unit (10), an image extractor (11), a QR code decoder (12), a game combination detector (13).

The I / O processor (4) is designed to receive and transmit messages by the server over the communication network. The functionality of the I / O processor is implemented by means of a web site on the server side, standard hardware and software for interfacing the server with the Internet and channels for receiving and transmitting messages in fixed and cellular networks.

The query processor (5) is intended for identification, recognition and dispatching of received messages, requests and game combinations, generation of server response messages, game time, secret code, game address, control address. The query processor is executed by an application program in the computer memory of the server.

The memory unit (6) is intended for the formation, updating, storage and processing of the register of game identifiers, the register of keys, the register of payments, the register of e-tickets and e-coupons, the register of won and given prizes. The memory block is made by means of a database in the computer memory of the server and the database management system.

The payment unit (7) is designed to perform the functions of paying the game cost and issuing prizes. The payment unit is implemented with an application program in the computer memory of the server and standard means for interfacing payment systems with the websites of network service providers.

The combination generator (8) is designed to generate a game identifier, an encryption key, and a winning combination of indices from the indices of the game set. The generator of combinations is implemented with an application program in the computer memory of the server using means for generating random numbers. In a particular case, the combination generator contains a synthesizer, which is designed to form a winning combination based on the results of completed games and is executed by means of an application program with elements of artificial intelligence.

The winning logic unit (9) is designed to determine the result of the game - winning a prize or losing - by comparing the game combination and the winning combination according to the criterion for prize winning determination. The winning logic unit is implemented with an application program in the computer memory of the server.

The encryption unit (10) is designed to convert the secret code by means of encryption into an open code. The encryption unit is executed by an application program in the computer memory of the server.

The image extractor (11) is designed to extract the QR code image and the game set image from the e-ticket image. The QR code decoder (12) is designed to decode a QR code into a text string. The game combination detector (13) is designed to detect the elements marked by the user in the image of the game set, identify these elements and compose a game combination from them. The image extractor, the QR code decoder and the game combination detector are executed by means of application programs in the computer memory of the server.

The communication channel (14) is intended for the exchange of messages in half-duplex mode between the terminal and the code validator. The functions of half-duplex communication are performed by the Internet, communication channels of messengers on the Internet and in cellular networks, in particular, SMS-, MMS- and USSD-communication channels.

The code validator (15) is designed to check the correspondence of the secret code to the open code. The code validator is made by means of a website with a publicly available source program code containing an encryption program unit (16) and a comparison program unit (17). The encryption unit (16) of the code validator is similar to the encryption unit (10) of the server, the comparison unit (17) performs character-by-character comparison of text lines.

To participate in the game, a user pays the game cost through a terminal using one of the available methods. The terminal generates and transmits through the communication network to the server a request to pay the cost of the selected game, the server interacts with the payment systems and performs the operation of paying the game cost.

For gamification of retail promotions, game costs and prizes are included in the costs of the organizer of the promotion, the operation of paying the cost of the game is reduced to checking whether the user has the right to participate in the promotion, which is confirmed, for example, by a payment transaction for the product at the seller's online POS terminal or by a payment transaction in the online store.

For gamification of loyalty programs, the means of payment are bonus points of the loyalty program or the time of viewing advertisements, the operation of paying the cost of the game is the operation of transferring bonus points from the user's account in the loyalty program to the game account on the server or the operation of requesting and obtaining the user's consent to view advertising. When purchasing a product, the user can agree to pay the cost of the game with points for the purchase without crediting them to the bonus account and immediately receive an e-ticket.

In case of using fiat money, the payment of the game cost is performed by means of known available payment systems.

Upon completion of the game cost payment operation, the server and the terminal receive a payment confirmation (from the promotion server, the loyalty program server or from the fiat payment system) and the terminal sends the e-ticket request to the server.

After accepting the e-ticket request, the server sequentially performs steps 1-7:
1) By means of the query processor (5) and the memory unit (6), determines the game set of indices and the game deadline. The game index set for the paid game is stored in the memory unit as an index array in the server-served game specification sets. The game deadline is calculated by adding to the time of successful completion of the payment of the game cost a preset estimate of the time interval during which the open code of this game cannot be decrypted with a high probability, for instance, it is impossible to find a winning combination by enumerating, encrypting possible values of the secret code and comparing the encryption results open source.
2) By means of the combination generator (8), generates a game identifier, an encryption key, a winning combination of indices. The combination generator, made using a random number generator, generates a game identifier by randomly choosing 6-8 characters from a set of all lowercase and uppercase letters of the Latin alphabet and all Arabic numerals, the encryption key - by randomly choosing at least 20 characters from the same set, a winning combination - random selection of indices from the game set of indices according to the rules of the game.
3) By means of the query processor (5), compiles a secret code of the game that contains the encryption key and the winning combination.
4) By means of the encryption unit (10), encrypts the secret code, getting an open code as a result of encryption. In the preferred embodiments of the invention, the encryption unit encrypts the secret code into the open code using an one-way encryption algorithm [Bruce Schneier. Applied Cryptography: Protocols, Algorithms and Source Code in C. 2nd Edition, Wiley 2007], so the winning combination can theoretically be found from the open code only by brute force, i.e. compiling possible values of the secret code, encrypting them and comparing the encryption results with the given open code.
5) By means of the query processor (5), compiles a game address that contains the server website address, the game identifier, and the open code as parameters of the game address.
6) By means of the memory unit (6), creates an e-ticket record and stores in it the cost and deadline of the game, game set of indices, game identifier, open code, game address, compiles a control address containing the code validator address, secret code and open code as the first and the second parameters of the control address, creates an e-coupon record and stores the e-ticket record information, the winning combination, the secret code and the control address in it. In the e-ticket and e-coupon records, the game set is stored in the index list format or in the format of a table with indexed cells.
7) By means of the query processor (5) and the I/O processor (4), transmits a copy of the e-ticket record over the communication network (2) to the terminal (1).

The terminal, using a QR code generator unit, converts the game address into a game address QR code and prints the copy of the e-ticket record and the game address QR code as an e-ticket on a printer and / or displays the copy of the e-ticket record and the game address QR code as an e-ticket on the display. The user can take and save a photo of the e-ticket image before entering the game.

In the given modification of the e-ticket, the terminal converts the open code into an open code QR code and displays the open code QR code in the e-ticket.

In a particular case of gamification for a promotion arranged by a retail network, the network POS terminal is involved in the process of paying the cost of the game, which, upon completion of the product payment transaction, receives a copy of the e-ticket record from the retail network server connected to the game server via the communication network, and prints the e-ticket in addition to the receipt of payment for the purchase of the product. When a promotion is carried out by an online store, the terminal functions are performed by the user's mobile device or personal computer (PC), the e-ticket is displayed on the terminal display, the QR code of the game address in the e-ticket serves as a link to the online game by clicking on the QR code.

In the second embodiment of the invention, the e-ticket is printed on paper by the terminal. The general data of the e-ticket and the scheme of the game set with orientation markers can be presented on printed forms in advance, and then the terminal, upon payment for the game, prints in the dedicated field of the form unique data of the e-ticket - the game deadline, the game ID, the open code, the QR code game address and possibly a QR code of the open code.

In both the first and second embodiments of the invention, the user can, by means of a mobile device or PC with a web browser and a QR code decoder, go to online play at the address from the QR code of the e-ticket. As a result of this, the mobile device or PC will continue to perform the functionality of the terminal in the claimed game system.

In the online game, the user observes a game interface on the terminal display, the scheme of which is similar to the paper e-ticket and includes all its data. For example, in the online game "Find This", the game interface scheme may be implemented as the e-ticket in FIG. 1a.

There are two play modes in the online game - one-time and iterative.

In the one-time online game, the user marks in the scheme of the game set of the game interface on the terminal display all the elements of the game combination necessary for the game; the game interface converts these marks of elements into indices of the game combination and transmits the indices over the communication network to the server to the game address as a part of the game request. The server, through the I / O processor, receives the request, through the query processor, identifies the game request with the given game address, stores the game identifier and the network address of the terminal from which the request was sent in the RAM, transmits the game identifier and the open code to the memory unit, transmits the game combination to the winning logic unit. The memory unit by the game identifier finds the e-coupon record in the database, verifies the open codes in the e-coupon record and the game address, reads the winning combination of indices from the e-coupon record and transfers the winning combination of indices to the winning logic unit. The winning logic unit compares the game combination of indices with the winning combination of indices according to the prize winning rules, determines the result of the game - whether a prize is won or not, transfers the game result and a game combination to the memory unit.

The memory unit notes the indices of the game combination in the game set of indices in the e-coupon record, saves the game result in the e-coupon record, transmits a copy of the e-coupon record to the query processor. The query processor for the game identifier in the copy of the e-coupon record finds in the RAM the network address of the terminal and through the input-output processor sends the copy of the e-coupon record to this address via the communication network.

The terminal receives the copy of the e-coupon record, converts the game address and the control address into the corresponding QR codes, and displays the copy of the e-coupon, the game address QR code and the control address QR code as the e-coupon.

In the given modification of the e-coupon, the terminal converts the open code into a QR code of the open code and displays the open code QR code in the e-coupon.

To check the correctness of the game, the user makes sure of the identity of the open codes in the e-coupon and the e-ticket and establishes a connection between the terminal and the code validator via the communication channel at the control address encoded in the QR code of the control address. The code validator encrypts the first parameter of the control address using an encryption unit, compares the encryption result with the second parameter of the control address using a comparison unit, and transmits the results of encryption and comparison to the terminal. In the simplest embodiment of the code validator, the comparison unit digitally subtracts one compared operand from the other bit-by-bit, the zero vector of all bits of the comparison result means that the second parameter of the control address is the result of the encryption of the first parameter, that is, the secret code is really encrypted in the open code of the game. By changing the characters in the first parameter of the control address (i.e., in the encryption key and / or in the winning combination), the user receives non-zero subtraction results from the code validator and makes sure that manipulations in the secret code change the results of its encryption, which do not correspond to the specified unchanged open code of the game.

To visualize the process of codes validation to the user, the terminal using a QR code generator generates a QR code of the open code, a QR code of the encryption result received from the code validator, performs and displays the operation of comparing or subtracting these QR codes.

If the e-coupon contains a mark about a not-issued prize, the user establishes a connection between the terminal and the server at the game address and sends a prize request to the server. The I/O processor transfers the prize request, the game identifier, and the open code from the game address to the query processor, which, in interaction with the memory unit, finds the e-coupon record of the completed game in the database. If the e-coupon record contains a positive result of the game and a mark about a not-issued prize, the query processor, in cooperation with the payment unit and the memory unit, performs the operations to issue the prize. The memory unit enters a note on the issue of the prize in the e-coupon record, the query processor generates and sends a message about the issue of the prize to the terminal through the I/O processor via the communication network to the terminal.

In the iterative online game, the terminal, upon the user's command, establishes a connection with the server at the game address and transmits the game request. The server, through the I/O processor, receives the request, through the query processor identifies it as the game request with the given game address, saves the game identifier and the network address of the terminal from which the request was sent in the RAM, transmits the game identifier, open code, and game combination to memory unit. The memory unit by the game identifier finds the e-coupon record in the database, verifies the open codes in the e-coupon record and the game address, reads the winning combination of indices from the e-coupon record and saves it in RAM under the game identifier, forms in RAM under the game identifier the current (empty) game combination and sends a message about the start of the iterative process to the terminal through the query processor and the I/O processor via the communication network.

At each iteration of the game process, the allowable number of which is determined by the game rules, the user marks, in the game set scheme of the game interface on the terminal display, one element or several elements of the game combination, the game interface converts these marks into game combination indices and transmits these indices and the game identifier over the network connection to the server to the address of the game. According to the game identifier, the query processor finds the winning combination and the current game combination in the RAM, supplements the current game combination with the received game combination indices and transfers the winning combination and the current game combination to the winning logic unit. The winning logic unit compares the current game combination with the winning combination, determines the current game result according to the prize-winning rule and transfers it to the query processor. A positive current result of the game means winning a prize from the list of prizes of the game, a negative current result of the game means no winnings and possibly the end of the game. The query processor transmits the current game result via the communication network to the terminal through the I/O processor, the terminal displays the current game result. If the current game result is positive, the user can request the won prize or go to the next iteration of the game process, if the current iteration is not the last one allowed by the game rules. If the current game result is negative, the user leaves the game without winning a prize or proceeds to the next iteration, if the game rules allow it.

Checking the correctness of the game and requesting a prize in the iterative online game are performed in the same way as in the one-time online game.

In the second embodiment of the invention, the user can play through the online game interface as described above, or with the paper e-ticket. To play with the paper e-ticket, the user marks the elements of the game combination in the game set of the paper e-ticket and either scans the e-ticket by the terminal scanner or photographs the e-ticket with a digital camera.

In case of scanning the e-ticket, the terminal generates an image of the e-ticket, by means of the image extractor extracts the image of the game set and the image of the QR code of the game address from the e-ticket image using the orientation marks, by means of the combination detector detects in the image of the game set the elements marked by the user and positions them in the game set, finds the indices of the elements in the game set and compiles the game combination of indices. By means of the QR code decoder, the terminal reads the game address from the QR code image.

The terminal checks the correspondence of the game combination indices to the game combination format established by the game rules. In case of discrepancy, the terminal prints out a duplicate e-ticket with the game deadline of the original e-ticket and the user marks the game set elements again. Otherwise, the terminal sends the game combination indices over the communication network to the game address.

Having received the game combination indices after the game deadline for this e-ticket and if there are no game combination indices in the e-coupon record in the server memory unit, the server generates for the given game identifier the new game deadline, encryption key, winning combination, secret code, open code, stores this data in the e-ticket and e-coupon records instead of the previous data and sends an updated copy of the e-ticket record to the terminal.

Having received the game combination indices before the deadline for this e-ticket and if there are no game combination indices in the e-coupon record in the server memory unit, the server processes the game combination in the same way as in the above one-time online game mode, while the terminal prints an e-coupon for the user.

In case of photographing the e-ticket, the user sends its digital photo via the communication network to the server address by means of a standard Internet messenger. The received digital image is transferred by the query processor to the image extractor, which, according to the orientation marks, extracts from the e-ticket image the image of the game set and the image of the QR code of the game address and transmits these images to the game combination detector and QR code decoder, respectively. The game combination detector detects in the image of the game set and positions the elements of the game set marked by the user, finds their indices in the game set, forms the game combination of indices, and transfers it to the query processor. The QR code decoder reads the game address from the QR code image and passes the game address to the query processor.

Further, the terminal and the server interact in the same way as in the one-time online game, and then the terminal displays the e-coupon on the terminal from which the photo was sent. Having received the e-coupon, the user has an opportunity to check the game correctness by using the QR code of the control address and to request the issuance of the prize won by using the QR code of the game address.

An example of a paper e-ticket game is a game designed to *search line-by-line for N winning cells in a table of N lines.* At N=12, in this game under a conditional name *"Football*+_*4×12"* the player-user inflicts up to 12 kicks on goal of the goalkeeper-server. As a target, the player chooses a zone X of the 4 goal zones (the number of zones varies from 2 to 6 depending on the "size" of the goalkeeper), not knowing which zone Y the goalkeeper will defend, who, in turn, does not know the target zone X of the player.

In this game, the scheme of the game set is represented by a table, the cells of which are indexed by row numbers from 1 to 12 and column letters A, B, C, D. The number of each row is equal to the ordinal number of the shot on goal, each letter designates a goal zone. In the e-ticket, each row contains one losing cell Y - the goal zone protected by the goalkeeper, and 3 winning cells - the goal zones not protected by the goalkeeper, the choice of one of which as the target X means the goal is defeated. A scored goal increases the game prize indicated in the rightmost column for goals scored in a row. At X = Y, the goalkeeper saves the goal, the game prize resets to zero, but the game can continue until the 12th shot on goal with the accumulation of the prize from scratch. As a result, this game is called Football+, in contrast to the game Football, in which an unsuccessful shot on goal not only nullifies the prize, but also ends the game. To reduce the risk of nullifying the prize, the user can mark goal zones only in the first L rows of the table, where L< 12. Thus, in this game, the power M of the winning combination is 3x12=36, the power L of the playing combination does not exceed 12.

After paying the game cost, the user receives from the terminal a paper e-ticket shown in FIG. 3a. The title of the e-ticket contains the name of the game Football+_4, the game cost 2 points, the date and time of issue of the e-ticket. This is followed by a scheme of the game set in the form of a table with indexed cells, the leftmost column of the table shows the numbers of shots on goal, the rightmost column shows the value of the prize in points for goals scored in a row, starting from the first shot. Thus, in this game, the prize for 12 goals scored in a row is 12 points, which is 6 times the cost of the game. At the bottom of the e-ticket are printed the game ID, the open code, the QR code of the game address and an offer to use the QR code to enter the online game OR mark the targets of strikes and scan the ticket.

Acting according to the second option, the user marks in the e-ticket the zones of shots on goal in the table rows with numbers from 1 to 12 and scans the e-ticket by the terminal scanner. In this case, the user marked 12 cells with letters A, B, C, D, D, C, B, A, B, C, C, A in the e-ticket from bottom to top (see Fig. 3b). The terminal image extractor, based on orientation marks, extracted the images of the game set scheme and the QR code from the scanned image of the e-ticket, the game combination detector compiled a game combination 1A2B3C4D5D6C7B8A9B10C11C12A from the marked cells of the table, the QR code decoder converted the QR code into the game address (game server address + game ID + open code) and sent the game combination to the game address. The game server processed the game combination in the same way as in the one-time online game, with the result that the terminal printed out the e-coupon shown in FIG. 3 c.

The upper part of the e-coupon contains the game name, cost, date-and-time, as well as the game set table with balls and crosshairs. The balls are shown in the cells marked by the user in the e-ticket, the crosshairs mark the goal zones A, D, A, D, B, B, B, D, B, C, A, B (from bottom to top), which were defended in this game by the goalkeeper. The "winning" combination of this game 1A2D3A4D5B6B7B8D9B10C11A12B is made up of goal defense zones, however, according to the rules of the Football game, coincidence of the game and winning combination indices (X = Y) means "the server wins" and "the user loses". In this game, the goal was protected from the 1 st, 4th, 7th, 9^{th}, and 10th shots on goal. At each of these shots, the server cancelled the accumulated game prize (see the strikethrough value of the prize without brackets) and began to accumulate the prize again (see the value of the prize in brackets). As a result, the prize of this game became equal to 0.7 points.

The middle part of the e-coupon repeats the lower part of the e-ticket and contains an offer to go through the QR code and receive a prize of 0.7 p.

The lower part of the e-coupon contains the secret code, the date-time of the game creation, the QR code of the control address and an offer to go through the QR code and check the criterion of fair play.

### OTHER EMBODIMENTS OF THE INVENTION

In another embodiment of the invention, after completing the game cost payment process, the server generates, stores, transmits to the terminal, and displays on the terminal the game activation address as part of the game server address in the communication network and the game activation code. The server generates data and records of the e-ticket and e-coupon upon the fact that the user establishes a communication session between the terminal and the game server at the game activation address.

In another embodiment of the invention, the user receives a receipt for payment for a certain product and transmits from the terminal to the game server a set of values of the parameters displayed in the receipt as a request for an e-ticket. Upon this request, the game server contacts the product seller's server, requests confirmation of the receipt with the given parameter values and records the confirmation of the receipt as the fact of successful payment of the game cost.

In another embodiment of the invention, half-duplex communication channels of an Internet messenger are used as the communication network, an e-ticket image is transmitted in an attachment to a text message with the inclusion of the game identifier and open code in the message, the user sends the game combination by a text message with the inclusion of the game identifier and open code in the message, an e-coupon image is transmitted in an attachment to a text message with the inclusion of the code validator address, secret code, open code in the message.

In another embodiment of the invention, half-duplex channels for sending SMS, USSD, MMS messages in cellular networks are used as the communication network, an e-ticket image is transmitted by an MMS message with the inclusion of the game identifier and open code in the message, the user sends the game combination by SMS or USSD message with the inclusion of the game identifier and open code in the message, an e-coupon image is transmitted by MMS message with the inclusion of the code validator address, secret code and open code in the message.

### INDUSTRIAL APPLICABILITY

From the above embodiments of the claimed group of inventions their industrial applicability in organizing and conducting games follows for the target audiences of
- advertisement events for the promotion of products in retail trade networks, cellular networks and / or online stores with payment of the game cost by purchasing the product or by consenting to view ads in the game process,
- loyalty programs with payment of the game cost with bonus points,
- traditional lotteries with paper tickets,
- offline casinos and online casinos.

## Claims

1. An e-ticket and an e-coupon of a game implemented in a communication network,
which e-ticket and e-coupon are displayed on the terminal, respectively, before the start and after the end of the game,
the e-ticket contains the following e-ticket information
- a game set of indices,
- a list of prizes,
- a game deadline,
- a game identifier,
- an open code with encrypted information about a winning combination of indices,
- a link to a game address that address includes the game identifier, the open code, and a game server network address of the game for searching the winning combination of indices, which winning combination of indices is stored in a database of the game server along with the game identifier, the open code, and an encryption key,
the e-coupon contains
- the e-ticket information,
- a game combination of indices,
- a game completion time,
- a game result relating to winning a prize or not winning a prize,
- the encryption key,
- the winning combination of indices,
- a link to a control address that address includes an address of a code validator, the encryption key, the winning combination of indices, and the open code.

2. The e-ticket and the e-coupon of claim 1, wherein the e-ticket and the e-coupon contain a QR code of the open code.

3. The e-ticket and the e-coupon of claim 1, wherein the e-ticket is printed on paper, the e-coupon is printed on paper or displayed on the terminal screen, the links to the game address and to the control address are presented by a QR code of the game address and a QR code of the control address.

4. The e-ticket and the e-coupon of claim 1, wherein the game set of indices is presented both in the e-ticket and in the e-coupon as a table with indexed cells, the e-coupon indicates not won prizes and won prizes in case of a win, the table of the e-coupon indicates cells with the game combination of indices, and cells with the winning combination of indices.

5. The e-ticket and the e-coupon of claim 4, wherein:
- in the table of the e-ticket, each line or group of lines contains a prize for the error-free search for cells with the winning combination of indices in this line or group of lines and in the previous lines in a row, starting from the first line,
- in the table of the e-coupon, each line or group of lines contains won or not won prizes.

6. A game method applied in a communication network, comprising the steps of:
- specifying a game set of indices and options for composing a winning combination of indices and a game combination of indices,
- setting means of payments and game costs, prizes, and a prize-winning criterion based on a comparison of the game combination of indices and the winning combination of indices,
- informing users about game rules, means of payment, game costs and prizes,
**upon request for e-ticket from a terminal,**
- carrying out the game cost payment process,
- calculating a game deadline, generating a game identifier, an encryption key, and a winning combination of indices,
- creating a secret code that contains the encryption key and the winning combination of indices,
- encrypting the secret code into an open code,
- creating a link to a game address that address contains a game server address in the communication network, the game identifier, and the open code,
- forming an e-ticket record in the database and storing in the e-ticket record the game set of indices, the game deadline, the game identifier, the open code, and the game address,
- creating a link to a control address that address contains an address of a code validator, the secret code as a first parameter and the open code as a second parameter of the control address,
- forming an e-coupon record in the database and storing in the e-coupon record the above information from the e-ticket record, the secret code, and the control address,
- transmitting the e-ticket record over the communication network to the terminal,
**in the terminal,**
- displaying the e-ticket record as an e-ticket, or,
- converting the link to the game address into a QR code of the game address and displaying the e-ticket on screen with the QR code of the game address or printing the e-ticket with the QR code of the game address on paper,
- the user marking indices of the game combination in the game set of indices of the e-ticket, establishing a communication session between the terminal and the game server in the communication network at the game address, and transmitting information about the game combination of indices,
**in the communication session with the terminal,**
- finding the e-coupon record in the database according to the game address,
- checking the game deadline,
- receiving information about the game combination of indices,
- comparing the game combination of indices and the winning combination of indices according to the prize-winning criterion,
- determining the game result relating to winning or not winning a prize,
- storing the game result, the game combination of indices and the winning combination of indices in the e-coupon record, and
- transmitting the e-coupon record over the communication network to the terminal,
**in the terminal,**
- converting the links to the game address and the control address into a QR code of the game address and a QR code of the control address and
- displaying the e-coupon record with the QR code of the game address and the QR code of the control address on screen or printing the e-coupon record with the QR code of the game address and the QR code of the control address on paper,
**initiated by the user,**
- establishing a communication session between the terminal and the game server at the game address, and requesting a prize,
- establishing a connection between the terminal via a communication channel with the code validator at the control address,
**upon receipt of the request for a prize in the communication session with the terminal,**
- retrieving the e-coupon record in the database by the game identifier and the open code from the game address,
- reading the game result from the e-coupon record,
- if the game result is positive and a prize has not been issued, issuing the prize and saving prize issue information in the e-coupon record,
**upon receipt of the first and the second parameters of the control address via the communication channel of the terminal at the code validator,**
- encrypting the first parameter of the control address,
- comparing the result of the encryption with the second parameter of the control address,
- transmitting the result of the encryption and the result of the comparison via the communication channel to the terminal,
**the user at the terminal,**
- observing the results of encryption and comparison,
- entering to the terminal and transmitting to the code validator modified values of the control address parameters,
- receiving and observing the results of their encryption and comparison on the terminal.

7. The game method of claim 6, **characterized in** converting the open code into an open code QR code and displaying the open code QR code in the e-ticket and e-coupon, converting the result of encryption of the secret code received from the code validator into a QR code, comparing this QR code with the open code QR code and displaying the comparison result on the terminal.

8. The game method of claim 6, wherein:
- upon completion of the game cost payment process, forming, saving, transmitting to the terminal, and displaying on the terminal the game activation address comprised of the game server address in the communication network and the game activation code,
- generating the e-ticket and e-coupon data and records after the establishment of a communication session by the terminal at the game activation address.

9. The game method of claim 6, wherein:
- having received a product purchase receipt, the user transmitting from the terminal a set of values of the parameters displayed in the receipt via the communication network to the game server,
- in a communication session with the product seller's server, requesting a confirmation of the receipt with the accepted set of parameter values, and registering the confirmation as a successful completion of the game cost payment process.

10. The game method of claim 6, wherein
- the user marking game combination indices in the game set of a printed e-ticket and scanning the e-ticket by the terminal,
- on the terminal, detecting and identifying the marks of the game combination indices in the e-ticket, transmitting the identified indices to the game address as information about the game combination, printing the e-coupon,
- having received the e-coupon, the user by means of the terminal or a mobile device
--- scanning and decoding the QR code of the game address, establishing a communication session in the communication network with the game server at the game address, and transmitting a prize request,
--- scanning and decoding the QR code of the control address and establishing a connection via the communication channel with the code validator at the control address.

11. The game method of claim 6, wherein:
- the user marking game combination indices in the game set of a printed e-ticket, scanning or photographing the e-ticket and transmitting to the game server address the image of the e-ticket as the information about the game combination,
- upon receipt of the image of the e-ticket, decoding the game address from the QR-code of the game address, identifying the indices of the marked game combination indices, applying the identified indices as the game combination information in the game with the decoded game address.

12. The game method of claim 6, where in:
- the user transmitting information about the game combination of indices from the terminal to the game address in iteration process, sending at each iteration one or several indices of the game combination of indices,
- comparing the received indices with the winning combination of indices based on the prize-winning criterion and transmitting the current result of the game to the terminal,
- in case of a positive current result of the game, offering to go to the next iteration or to complete the game with the prize won,
- in case of a negative current result of the game, either cancelling the current prize won and closing the game, or cancelling the current prize won and reducing not-won prizes.

13. The game method of claim 6, **characterized in**
- specifying the game set of indices as a table with indexed cells,
- the user marking the game combination cells in the e-ticket table,
- indicating the game and winning combination cells in the e-coupon table.

14. The game method of claim 6, **characterized in** encrypting the secret code and the first parameter of the control address by means of a one-way hash function.

15. A game system that includes:
- at least one terminal containing means of receiving and transmitting information, a QR code generator, a QR code decoder, a game combination detector, a scanner, a printer,
- a communication network, which provides information transfer with the definition of the network addresses of the transmitter and receiver,
- a game server configured to connect to the terminal via the communication network through an input-output processor and containing:
--- connected in series with the input-output processor a query processor and a memory unit,
--- interconnected with the query processor and the memory unit, a payment unit, a combination generator, a winning logic unit, an encryption unit,
--- connected to the input-output processor and to the query processor an image extractor with a QR code decoder and a combination detector.
- a code validator, configured to be connected to terminals via communication channels, containing an encryption unit and a comparison unit.

16. The game system of claim 15, wherein the Internet is used as a communication network and communication channels, and the code validator is configured by means of a website with publicly available software source code.

17. The game system of claim 15, wherein half-duplex communication channels of messengers are used as the communication network and / or communication channels.
